# EUROPEAN PATENT APPLICATION

(11) **EP 2 824 428 A1**
(43) Date of publication of application: **14.01.2015**
(21) Application number: 13305990.7
(22) Date of filing: 11.07.2013
(51) Int. Cl.: G01F 1/66, G01F 15/14, G01F 15/18

(54) **Coaxial flow meter**

(71) Applicant: Itron France, 92130 Issy-les-Moulineaux (FR)
(72) Inventor: Bouzid, Tarek, 71000 Macon (FR); Elattar, Abdel Hakim, 71000 Macon (FR); Hyvernat, Stephane, 71000 Macon (FR)
(74) Representative: Korenberg, Alexander Tal

(57) **Abstract**

A flow meter for coaxial type flow meter sockets is provided. The flow meter is configured to have flow path branches sampling inlet flow from the socket around the perimeter of the socket and outlet branches intercalated with the inlet branches, in order to reduce the effect of the relative orientation of the meter and the socket on the flow behaviour inside the meter. This facilitates the use of a static flow detection arrangement, for example using ultrasound or electromagnetic detection mechanisms, specifically facilitating calibration of the detection mechanism without knowledge of the relative orientation between the meter and the socket once installed in the field.

## Description

### Field

The present disclosure relates to a flow meter for connection to a coaxial type flow meter socket, specifically but not exclusively to a flow meter having a flow measuring mechanism without moving parts, for example using ultrasound or electromagnetic flow measure.

### Background

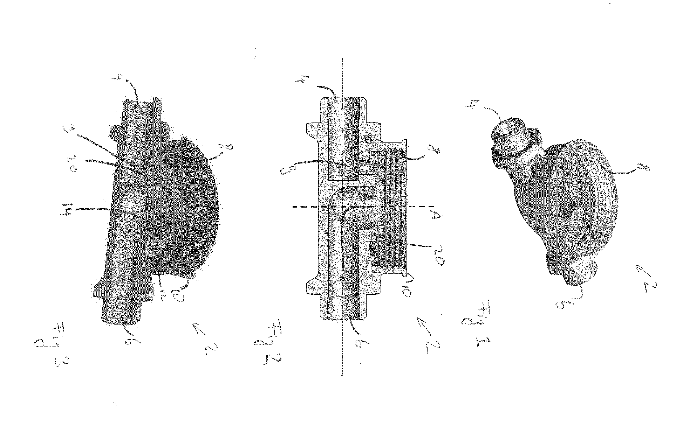

With reference to Figure 1, Figure 2 and Figure 3, a coaxial type flow meter socket 2 has an inlet conduit 4 and an outlet conduit 6 intended for connection to the water mains and also a tapping 8 for receiving a flow meter. In the region of the tapping 8, the inlet and outlet conduits are straight, of cylindrical shape and aligned on an axis A at the centre of each conduit in the region of the tapping 8. The outlet conduit 6 has an elbow and terminates in a circular cross section for interfacing the outlet conduit 6 with the flow meter. The inlet conduit 4 opens through an orifice 9 into an annular volume 16 for connection to an inlet of the flow meter. The annular volume 16 surrounds the outlet conduit 6 in the region of the tapping 8.

Known measurement capsules for this type of socket nearly exclusively use a turbine for flow measurement. Several types of coaxial sockets are available and installed in the field today. The only common point between these sockets is the arrangement of the connection interface with the flow meter as follows: a tapping 8 which receives the flow meter by a screwing action; a flat bearing surface 10 on top of the tapping 8 which acts as an abutment to the measurement capsule; a sealing surface 12 at the bottom of the tapping around the annular volume of the inlet conduit 4 and a sealing surface 14 around the circular cross section of the outlet conduit 6. The tapping 8, abutment 10 and sealing surfaces 12 and 14 define a connection interface for connecting the flow meter to the socket such that an inlet of the flow meter registers with an annular inlet volume 16 of the inlet conduit 4 and an outlet of the flow meter registers with a circular cross section volume 18 of the outlet conduit 6. The annular volume 16 is separated from the circular cross section volume 18 by an inner socket wall 20. The inner socket wall 20 ends in the sealing surface 14 disposed atop the inner socket wall 20.

The geometric differences between coaxial type sockets may be divided into two groups as follows:
- The shapes and geometric dimensions of the surfaces that limit the flow path of water upstream and downstream of the measurement capsule, in particular in terms of the diameters of the inlet and outlet conduits 4, 6, the size of the orifice 9 and the shape and dimension of the annular volume itself (depth, diameter, depth variation around circumference, etc.).
- The starting angle of the tapping 8 relative to the inlet and outlet conduits 4, 6, which is typically not controlled and can range over any angular orientation for a sample of sockets. As a result, the angular orientation of an installed flow meter relative to the inlet and outlet conduits 4, 6 is likely to have all the possible values between 0 and 360 degrees for a sufficiently large sample of sockets.

The inventors have realised that the variations described above give rise to significant variations of flow behaviour inside the flow meter, which adversely affect calibration of static flow measurements, such as ultrasonic flow measurement, although these differences have largely no effect on commonly available turbine flow meters. Further, the inventors have realised that the variations described above render factory calibration of a static flow meter impossible without the presence of the socket for which they are intended. This is a significant obstacle, since the sockets are installed in the field and cannot readily be removed to individually bring them to the factory for calibration. Further, the inventors have realised that the regulatory maximum limit on pressure loss and market demand for nominal flow rates and the maximum acceptable external dimensions of the flow meter make solutions such as reduced flow cross sections or increased flow path length to straighten and regulate the flow in order to reduce the effect of the connection to the socket undesirable.

### Summary

Aspects of the invention are set out in the independent claim. Further, optional features of embodiments of the invention are set out in the dependent claims.

In one embodiment, there is provided a flow meter for connection to a coaxial type flow meter socket. The socket comprises an interior socket wall separating an annular volume connected to one of an upstream and a downstream pipe of a water supply on one side of the annular volume from a central volume surrounded by the annular volume and connected to the other one of the upstream and downstream pipes. A fastening arrangement for accepting the flow meter along an installation axis and holding the flow meter relative to the socket is present on the socket. It will be understood that the socket is not part of the claimed subject matter but rather is recited to facilitate the definition of the interface between the flow meter and the socket.

The flow meter comprises a flow measurement chamber and a flow guiding arrangement for guiding flow between the annular and central volumes of the socket through the flow measurement chamber when the flow meter is connected to the socket. The flow guiding arrangement comprises an interior wall for sealingly registering with the interior socket wall of the socket when the flow meter is connected to the socket to provide a first flow path between the annular volume and one end of the flow measurement chamber and a second flow path between the central volume and another, opposed, end of the flow measurement chamber. The first and second flow paths each comprise a respective first and second plurality of flow path branches distributed in alternation around the interior meter wall. Each of the first plurality of flow path branches is arranged at least partially between adjacent ones of the second plurality of flow path branches and each of the second plurality of flow path branches is arranged at least partially between adjacent ones of the first plurality of flow path branches.

By distributing the flow paths in intercalated branches around the interior meter wall the variation of flow behaviour with the orientation of the flow meter relative to the socket on flow behaviour inside the flow measurement chamber is reduced. Moreover, the particular arrangement enables increased consistency of the flow behaviour inside the flow measurement chamber using a compact geometry that allows market demands for small outer dimensions combined with low pressure drops to be satisfied. This is particularly useful in flow meters with static measurement of flow, e.g. using ultrasound or electromagnetic flow measurement, but can equally be beneficial to condition flow behaviour in other types of meters, e.g. using those turbines to measure flow.

The branches of the first flow path may be separate from each other or may be joined together by a common flow volume, for example an annular volume surrounding the branches. In either arrangement, the intercalated arrangement of inlet and outlet flow path branches facilitates reducing the effect of orientation between the flow meter and socket.

In some embodiments, the flow meter is an ultrasonic flow meter, comprising a pair of ultrasound transducers disposed to measure flow in the flow measurement chamber. In other embodiments, other static flow measurement techniques are used, for example electromagnetic flow measurement.

In some embodiments, the flow guiding arrangement comprises a plurality of conduit portions extending outward from the interior meter wall, the conduit portions being distributed around the interior meter wall to accommodate each of the first plurality of flow path branches between adjacent ones of the plurality of conduit portions. Each of the second plurality of flow path branches passes through a respective one of the plurality of conduit portions. The flow guiding arrangement may provide a sealing surface around the first plurality of flow path branches for sealing against a surface of the socket surrounding the annular volume, with the first plurality of branches passing through respective orifices between the plurality of conduit portions. Alternatively, as described above, the first flow path branches may be joined together by a common flow volume such as an annular volume surrounding the branches, rather than passing through orifices. In this case the flow guiding arrangement would not seal against an outer housing of the flow meter but only against the inner socket wall when installed. As a consequence, in such embodiments, the flow guiding arrangement would be secured to the flow meter housing by other means, for example webs or vanes distributed with substantially rotational symmetry, about the installation access.

To maximise the rotational invariance of the flow, the flow path branches may be substantially of the same flow cross-section and/or may be spaced substantially evenly around the full perimeter of the interior meter wall. The flow path branches may be of substantially the same shape and/or may be generally arranged with substantial rotational symmetry around the installation axis. The flow paths may be arranged to pass through respective conduits, which may be substantially aligned with the installation access.

In some embodiments, the flow measurement chamber is substantially aligned with the installation access. In some embodiments, the flow measurement chamber may be substantially coaxial with the installation axis. In some embodiments, in particular those with the installation axis aligned with an axis of the measurement chamber, there is provided an ultrasound transducer at one end and an ultrasound mirror at another end at the measurement chamber. The ultrasound mirror is arranged to direct the ultrasound from the ultrasound transducer to another ultrasound transducer disposed to one side of the axis between the mirror and the transducer. Having the flow measurement chamber coaxial with the installation axis facilitates rotational symmetry with less turns of the flow path. Providing an arrangement in which an ultrasound mirror is used, means that ultrasound transducers can be provided on external aspects of the flow meter (one atop the flow meter, the other to one side of it) rather than requiring a second ultrasound transducer disposed between the socket and the flow meter when the flow meter is installed.

In some embodiments, an axis between the ultrasound mirror and the other ultrasound transducer crosses the wall separating the first and second flow path. For example, the wall where the axis crosses the wall may be configured to be thinner than in the surrounding areas to be more readily ultrasound "translucent", that is permeable to ultrasound waves. While this arrangement means that the ultrasound waves will cross part of the flow outside the measurement chamber. As the ultrasound waves pass across this extra flow, preferably substantially perpendicular to the extra flow, the effect on the detector flow rate can be accounted for by calibration.

In some embodiments, the first and second plurality of flow path branches are arranged around a seat for accepting one of a pair of ultrasound transducers substantially in axial alignment with the flow measurement chamber. In this arrangement, the flow measurement is done directly by two facing transducers without the need for an additional mirror component.

In some embodiments, flow measurement chamber is disposed across the installation axis, facilitating access to the ultrasound transducers from outside the flow meter.

Regardless of the specific configuration of the ultrasound transducers, in some embodiments, the ultrasound transducers are arranged to be mounted from outside the flow meter, at least when the flow meter is not connected to the socket.

In some embodiments, the first and second plurality of flow path branches each consists of four branches. In some embodiments, there are thus four conduit portions distributed around the interior flow meter wall, with corresponding flow path branches passing through the portions and with a set of flow path branches passing between the portions. It has been found in practice that, with current manufacturing techniques and materials, and for the dimensions of sockets in the field, a total of eight flow path branches represents a good trade-off between distribution of branches around the perimeter of the interior meter wall and flow path cross sections.

In some embodiments, the other end (that is the exit of the flow measurement chamber) is closer to the interior meter wall than the one end (that is the entry of the flow measurement chamber for the arrangement of inlet and outlet flow conduits of sockets found in the field). In these embodiments, the exit of the measurement chamber is closer to the socket and the entry to the measurement chamber is further away from the socket when the meter is installed. This provides a longer settling path for sockets found in the field where the annular volume is upstream. For sockets in which the reverse is true, the one end being closer than the other end to the interior meter wall would achieve this aim.

In some embodiments, the first flow path is partially defined by a first wall defining the flow measurement chamber and a second wall surrounding the first wall, wherein the second wall is preferably an exterior wall of the flow meter. Again, this provides a relatively longer settling path outside and along the measurement chamber. Where the second wall is an exterior wall of the flow meter, the cross sectional area of this settling path is maximised for a given form factor (as compared to additional interior walls being present) and a corresponding expansion in flow path cross section aids in settling the flow.

In some embodiments, the flow meter comprises a temperature probe port, which is configured to enable disposing a temperature probe in one of the flow paths, preferably in the second flow path. Enabling placement of a temperature probe allows the meter to be used as a heat meter in addition to the possible use as a water meter. By placing the temperature probe in the second flow path, preferably near the outlet to the socket, the effect on the rotational invariance of the flow behaviour inside the meter is minimised. In some embodiments, the temperature probe port is configured to enable disposing the temperature probe from outside the flow meter in one of the flow path branches, level with a sealing surface of the interior meter wall, or protruding beyond the sealing surface.

In some embodiments, a flow meter as described above is provided with a thread for threadingly engaging the fastening arrangement of the socket by rotation of the flow meter to fasten the meter to the socket. In other embodiments, alternative fastening arrangements are equally envisaged, for example securing the flow meter by an external freely rotating threaded ring or by a bayonet fastening mechanism.

### Brief description of the drawings

Specific embodiments are now described by way of example only with reference to the accompanying drawings, in which:
Figure 1 is a perspective view of a coaxial type socket for connecting a flow meter to the water or remote heating mains;
Figure 2 is a cross section view of the socket;
Figure 3 is a cutaway perspective view of the socket;
Figure 4 is a perspective view of the socket and an associated flow meter;
Figure 5 is a cross sectional view of the flow meter connected to the socket;
Figure 6 is an alternative cross section of the same flow meter and socket;
Figures 7 to 10 are perspective views of flow guide components of the flow meter of the previous views;
Figures 11 and 12 are cross sectional views of the flow meter in the previous views in an alternative configuration;
Figures 13 to 16 are cross sectional views of an alternative form of flow meter;
Figures 17 and 18 are cross sectional views of another alternative form of flow meter; and
Figures 19 to 21 are perspective views of a flow guide component of the other alternative form of flow meter.

### Description of examples

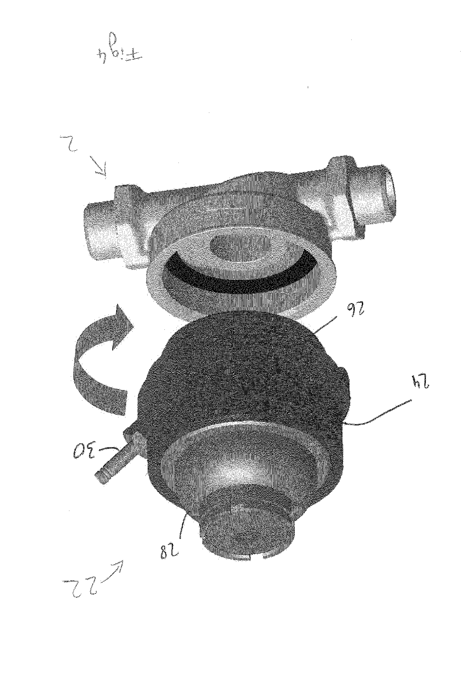

With reference to Figure 4, a flow meter 22 for connection to a coaxial type socket 2 comprises a body portion 24 having a thread 26 for threading connection to the socket 2. A bell shaped lid 28 forms a housing of the flow meter 22 together with the body portion 24. A temperature probe 30 is secured to the body portion 24 through a temperature probe port in embodiments in which the flow meter is used as an energy or heat meter.

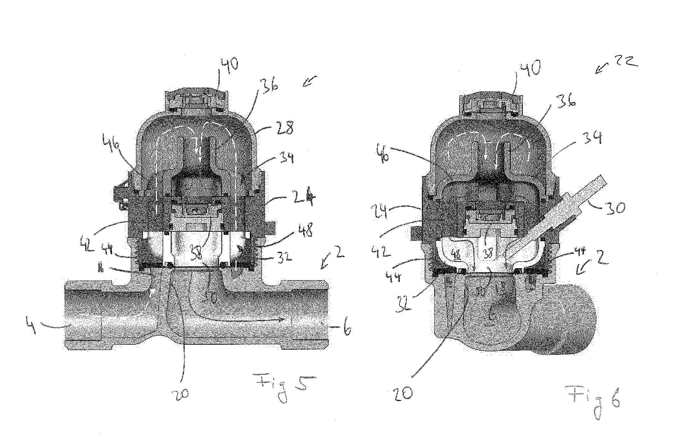

With reference to Figures 5 and 6, the body portion 24, together with a first flow guiding component 32 and a second flow guiding component 34 defines a flow guiding arrangement for guiding flow from the inlet conduit 4 to a measurement chamber 36 and from the measurement chamber 36 to the outlet conduit 6. A first ultrasound transducer 38 is provided in a seat defined by the body portion 24 and a second ultrasound transducer 40 is provided in a seat defined by the bell shaped lid 28. The transducers 38 and 40 are axially aligned with the flow measurement chamber 36 so as to measure flow through the flow measurement chamber 36. Leads connecting to the transducers 38 and 40 are routed through a radial through hole in, respectively, the body portion 24 and the lid 28. Specifically in case of leads connecting to the transducer 38, these are routed through the body portion 24 between flow conduits 42 now described in further detail.

The body portion 24 defines an even number of flow conduits 42 distributed evenly around the seat for the transducer 38. Every other one of the conduits 42 is at one end in fluidic communication with an annular volume 44 defined at one end of the body portion 24 in register with the annular volume 16. At the other end, the conduits 42 are in fluidic communication with a volume inside the bell shaped lid 28 to define a flow path between the annular volume 16 and an entry to the measurement chamber 36, which is exposed to fluid in the volume defined by the lid 28. This flow path is illustrated in Figures 5 and 6 by dashed lines.

An exit of the flow measurement chamber 36 is connected to a manifold defined by the flow guide component 34 defining a plurality of conduit projections or lobes in register with the conduits 42 in between the every other conduit 42 described above. These conduits are in turn connected to conduit projections or lobes 48 defined by the first flow guide component 32, which in turn are connected to a manifold abutting an interior meter wall 50. The interior meter wall 50 has a sealing arrangement, such as an O-ring, held in corresponding groove, for sealing against the sealing surface 14 of the interior socket wall 20 to define an outlet volume together with the central circular cross sectional volume 18 of the outlet conduit 6. Thus, a second flow path from the exit of the measurement chamber 36 through the projections 46 of the flow guide component 34, conduits 42 of the body portion 24 and projections 48 of the flow guide component 32 past the interior flow meter wall 50 and a corresponding circular cross section volume 18 of the outlet conduit 6 is provided, which guides flow from the exit of the flow measurement chamber 36 to bypass the first ultrasound transducer 38 on its way to the outlet conduit 6.

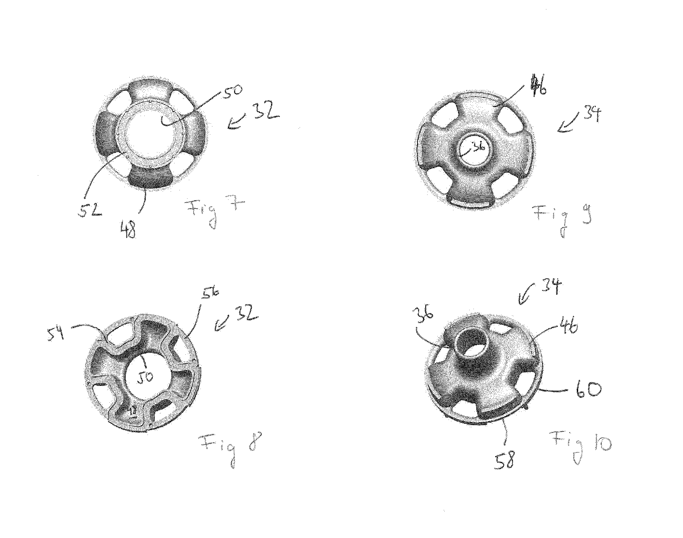

With reference to Figures 7 to 10, the flow guide components 32 and 34 are now described in further detail. Flow guide component 32 closer to the socket when installed, defines the flow meter interior wall 50 with a seat 52 for accepting an O-ring facing the socket. Opposed from the seat 52, the projections or branches 48 extend from the inner wall 50 outward and abut at their other end a seat 54 for accepting an O-ring for sealing against the body portion 24. The seat 54 is configured in a clover-like meander configuration to seal against the body portion 24 outside of the conduits 42 in the flow path from the measurement chamber 36 to the outlet conduit 6, inside of the conduits 42 from the inlet conduit 4 to the entry of the measurement chamber 36 and between the conduits. Interleaved portions 56 register with the body portion 24 outside the conduits in the flow path from the inlet conduit 4 to the entry of the flow measurement chamber 36 to provide a ring shaped outer footprint of the first flow guide component 32 in the region of the body portion 24.

Turning to the flow guide component 34, this defines, at one end thereof, the measurement chamber 36 (although, in some embodiments, the measurement chamber 36 may be provided as a separate component) and defines a sealing surface 58 with intermittent portions 60 analogous to the sealing portion 54 and intermittent portions 56 for sealing against the body portion 24. An end of the measurement chamber 36 opposed to the sealing surface 58 is configured as a free end to receive liquid flow from the volume inside the bell shaped lid 28.

In the configuration discussed above with reference to Figures 5 and 6, the flow guide components 32 and 34 are arranged with the respective projections 48 and 46 aligned with one and the same set of conduits to provide a flow path from the inlet conduit 4 to the entry of the measurement chamber 36 between the projections 48, 46 and the flow path from the other end of the measurement chamber 36 to the outlet conduit 6 through the projections 48, 46.

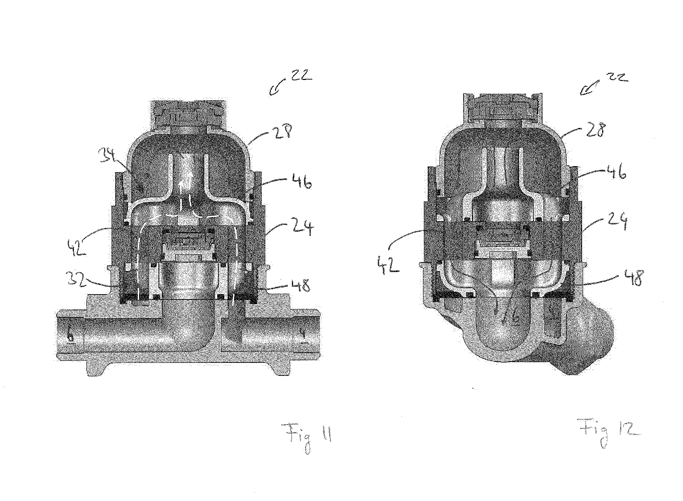

In an alternative configuration of the body portion 24 and flow guide components 32 and 34, now discussed with reference to Figures 11 and 12, the flow guide components 32 and 34 are rotated relative to each other compared to the arrangement described above such that each one registers with a respective different set of the conduits 42. The conduits 42 which are in register with the projections 46 of the flow guide component 36 receive liquid flow from the inlet conduit 4 in-between the projections 48 of the flow guide component 32, which flow is guided by the projections 46 of the flow guide component 36 into the measurement chamber 36, flowing towards the free end of the measurement chamber 36 and from there via the volume defined by the bell shaped lid 28, between the projections 46 of the flow guide component 34 through another set of conduits in register with the projections 48 of the flow guide component 32 past the inner flow meter wall 50 to the outlet conduit 6.

By choice of relative orientation of the flow guide components 32 and 34, the flow can thus be directed to either flow from an end of the flow measurement chamber 36 proximal to the socket to a free end of the measurement chamber 36 distal from the socket, or vice versa. Having the flow direction from the free, distal end of the flow measurement chamber 36 to the proximal end of the flow measurement chamber 36 allows for a longer settling pass before a flow measurement is taken and the expansion inflow cross section as the flow emerges from in-between the projections 46 of the flow guide component 34 into the volume under the bell shaped lid 28 further aids in the settling of the flow. In either case, the intercalated arrangement of flow path branches around the ultrasound transducer 38 creates a more or less rotationally invariant arrangement (depending to the extent on which the configuration of the individual conduits and components is or approximates rotational symmetry) and results in a reduced influence of the orientation of the flow meter relative to a socket on the calibration of flow measurements.

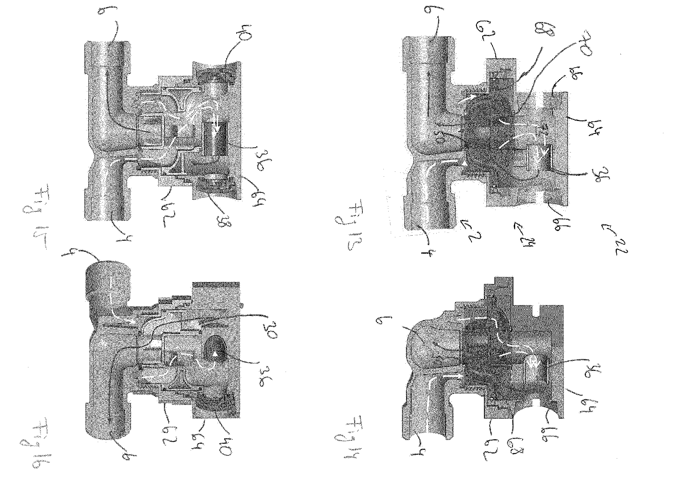

With reference to Figures 13 to 16, in an alternative embodiment, the flow measurement chamber 36 and the axis between ultrasound transducers 38 and 40 are disposed across the axis A of the insertion of the flow meter described above with reference to Figure 2, in contrast to the coaxially aligned embodiments described above with reference to Figures 5 to 12. The body portion 24 comprises two sub portions 62 and 64. The sub portion 62 comprises a thread for engaging the tapping 8 of the socket 2 at one end and interfaces with the sub portion 64 at another end. The sub portion 64 holds the flow measurement chamber 36 in axial alignment with respect seats 66 for ultrasound transducers 38 and 40.

The sub portions 62 and 64 are sealingly connected and securely hold between them a single flow guide component 68. The single flow guide component 68, at one end, seals around the inner perimeter of the second sub portion 64 and against sealing surface 70 at the entrance of a conduit 72 communicating with one end of the measurement chamber 36. The single flow guide component 68 defines the flow meter wall 50 at another end, opposed to the one end and provides a flow path from the inlet conduit 2 to the entry of the flow measurement chamber 36 and from the exit of the flow measurement chamber 36 to the outlet conduit 6.

The flow path from the inlet conduit 4 is split into four branches by the single flow guide component 68, disposed around the inner flow meter wall 50. Intercalated between the resulting flow path branches, the single flow guide component 68 splits the flow from the exit of the measurement chamber 36 into another set of branches intercalated between the branches of the inlet flow path around the inner flow meter wall 50 to guide flow from the exit of the flow measurements chambers 36 to the centre of the flow meter and past the inner flow meter wall 50 to the outlet conduit 6. The arrangement of flow path branches in the inlet and outlet flow path is thus analogous to the arrangement described above with reference to Figures 5 to 12, specifically 11 to 12, with, in effect, the conduits 42 defined by the body portion around the ultrasound transducer 38 removed.

By orientating the flow measurement chamber 36 across the axis A, both ultrasound transducers 38 and 40 are outside any flow path and not surrounded by flow path branches, which enables easier connection to both transducers to be made. Further, this arrangement facilitates use of a single flow guide component moulded from a single mould as a opposed to the three part assembly described above with reference to Figures 5 to 12. In a variation of the embodiment described with reference to Figures 13 to 16, the single flow guide component 68 can be replaced with an assembly of two flow guide components similar to the flow guide components 32 and 34 described above, enabling different flow path configurations to be achieved based on the relative orientation of the two components.

The principles just described with reference to Figures 13 to 16 apply to both sets of Figures 13 and 14 on the one hand and Figure 15 and Figure 16 on the other hand, the difference between these Figures being the arrangement of the various components to achieve different form factors, with the extent of the flow meter along the axis A limited in the arrangement of Figures 13 and 14 relative to that of Figures 15 and 16 and the radial extent beyond the socket being reduced in Figures 15 and 16 relative to Figures 13 and 14.

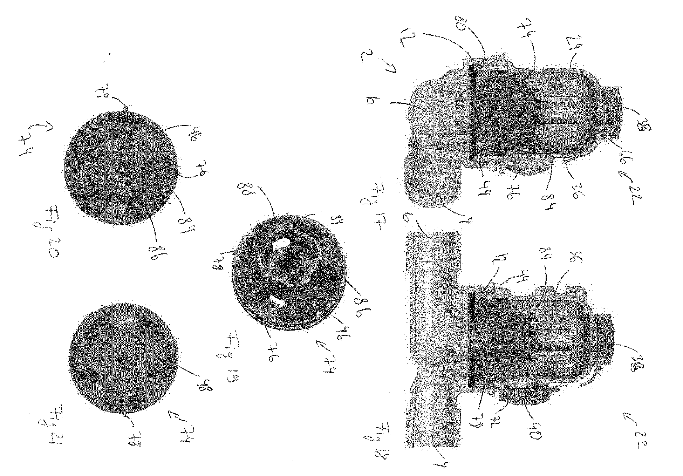

With reference to Figures 17 to 21, another embodiment is now described, which facilitates disposing the ultrasound transducers 38 and 40 outside the flow path and flow path branches by use of an ultrasound mirror. A single piece body portion 24 comprises a thread for interfacing with the tapping of the socket 2 at one end and a seat 66 for an ultrasound transducer at another, opposed end, as well as a further seat 72 for an ultrasound transducer to one side of the body portion 24. The seats 66 and 72 house, respectively, ultrasound transducers 38 and 40. Within the volume defined inside the body portion 24 a flow guide component 74 is disposed with the insertion and orientation of the flow guide component 74 into the body portion 24 being defined by, respectively, a shoulder 76 and a pin 78 interacting with corresponding features on the body portion 24.

At one end, proximal to the socket 2, the flow guide component 74 defines the interior meter wall 50 for sealing against the interior socket wall 20 via a sealing member 80. The sealing member 80 also provides a sealing surface for sealing between the body portion 24 and the sealing surface 12 of the socket 2, in effect providing an inner and an outer O-ring joined by webs distributed around the inner O-ring, preferably with rotational symmetry, to provide the sealing required between the flow meter 2 and the socket 22, as well as a liquid path from the annular volume 16 of the socket 2 to the volume 44 of the housing and from there via the flow guide component 74 to the measurement chamber 36.

The measurement chamber 36 is secured to the flow guide component 74 at a distal end, opposed to the interior meter wall 50. From the exit of the measurement chamber 36, flow then passes through a volume 82 inside the body portion 24, through the flow guide component 74 past the interior meter wall 50 to the outlet conduit 6 of the socket 2. The volume 82 inside the body portion 24 is separated from the volume 44 inside the body portion 24 by an O-ring sealing around the flow guide component 74 against an inner surface of the body portion 24.

As for the embodiments described above, the flow guide component 74 provides flow path branches distributed around the inner meter wall 50 to guide flow to an entrance of the flow measurement chamber 36. In this way, liquid flow is sampled around the annular volume 16 of the inlet conduit 4 of the socket 2, reducing the effect of the orientation between the socket 2 and the flow meter 22. From these inlet flow path branches, flow of liquid passes around an ultrasound mirror 84 to the entry of the flow chamber 36. On the return flow path from the exit of the flow measurement chamber 36, outlet flow path branches are disposed between the inlet branches as described above for other embodiments and collect flow from the volume 82, directing it towards the centre of the flow meter 22 underneath the mirror 84, and past the interior meter wall 50 to the outlet 6.

The mirror 84 is held in a mirror seat 86 to direct ultrasound to or from the transducer 38 from or to the transducer 40. Where an axis between the mirror 86 and the ultrasound transducer 40 crosses the material of the flow guide component 74 a thinned wall section 88 is provided to facilitate transmission of ultrasound between the mirror 86 and the transducer 40. The thinned wall section (or portion) 88 has a wall thickness that is less than the wall thickness of adjacent wall sections or portions.

In the specific embodiment just described, the flow guide component 74 is moulded as a single piece to form the ultrasound mirror seat 86, locating features 76 and 78 and projections 46 and 48 for guiding flow in intercalated flow path branches as discussed in more detail above with reference to Figures 7 to 10. It will, however, be appreciated that the flow guide component 74 can equally be assembled from two or more pieces in a variation of the embodiment just described with reference to Figures 17 to 21.

While there are various differences between the embodiments described above, many features are in common and have not been described again for the embodiments discussed with reference to Figures 11 to 21 to the extent that they have already been discussed with reference to Figure 5 to 10 above. Equally, while specific differences have been described above with reference to separate embodiments, it will be appreciated that in some embodiments, features of the described embodiments can be combined in combinations not discussed above. For example, variations in the constructional details (body portion with separate lid or with integrated lid, one part or two or more part assembly of flow guide components, partial integration of flow guide components with body portion, etc.) are independent of certain other features such as the orientation of the flow measurement chamber, the arrangement of the ultrasound transducers, etc. All such compatible combinations are also hereby disclosed. Where it is desired to use the flow meter of any of the above embodiments as an energy meter, a temperature probe 30 can be integrated with the flow meter, for example as illustrated in Figures 6 and 16. It is preferred that the measuring tip of the temperature sensor 30 is disposed in an outlet flow path downstream of the flow measurement chamber so as not to disturb rotational invariance or insensitivity of the inlet flow path or, conversely, not to increase the influence of the orientation between the meter and socket.

Common to all embodiments described above, an inlet flow path connecting an entry of the measurement chamber with the socket is arranged to have branches that sample flow from the socket around the annular extent of an annular inlet volume of the socket. To achieve rotational invariance or insensitivity or reduced sensitivity to meter to socket orientation, outlet flow path branches are disposed in between inlet flow path branches so as to more or less evenly distribute flow path branches in an intercalated manner around the flow meter.

It will be apparent that the larger the number of inlet flow path branches, the better the rotational insensitivity of the resulting arrangement. For example, it can be seen that for an arrangement with only two inlet flow path branches arranged opposite each other, the effect of orientation will clearly be significant. The larger the number of branches in each flow path (for a total even number of branches) the less the effect of orientation on flow behaviour inside the flow meter will be. However, given the need for a certain amount of material to separate the flow path branches, increasing the number of branches results in an increased overall cross sectional area of material and therefore in a reduced flow cross section with a resulting higher pressure drop. Therefore, there exists a number of branches which represents an acceptable trade-off between rotational sensitivity and pressure drop.

For existing sockets in the field and available materials, eight flow path branches (four in the inlet flow path and four in the outlet flow path) have been found to represent a good trade of combining acceptable dependence of flow behaviour on the orientation between the flow meter and the socket and acceptable pressure loss. An arrangement with three branches in each flow path would have reduced rotational insensitivity but could be provided with reduced pressure drop, while arrangements with 5, 6, 7 or 8 branches in each flow path would have increasing pressure drop but also increased rotational insensitivity.

While specific embodiments have been described above by way of example to illustrate aspects of the present disclosure, it will be appreciated that many variations, alterations and juxtapositions of the specific features described above are possible within the scope of the present disclosure. The scope of the invention is defined by the appendant claims.

## Claims

1. A flow meter for connection to a coaxial type flow meter socket, the socket comprising an interior socket wall separating an annular volume connected to one of an upstream and a downstream pipe of a water supply from a central volume surrounded by the annular volume and connected to the other one of the upstream and downstream pipes, and a fastening arrangement for accepting the flow meter along an installation axis parallel to an axis of the annular volume when the flow meter is installed and holding the flow meter relative to the socket, the flow meter comprising:
a flow measurement chamber;
a flow guiding arrangement for guiding flow between the annular and central volumes through the flow measurement chamber when the flow meter is connected to the socket, the flow guiding arrangement comprising
an interior meter wall for sealingly registering with the interior socket wall when the flow meter is connected to the socket to provide a first flow path between the annular volume and one end of the flow measurement chamber and a second flow path between the central volume and another, opposed, end of the flow measurement chamber,
the first and second flow paths each comprising a respective first and second plurality of flow path branches distributed in alternation around the interior meter wall, wherein each of the first plurality of flow path branches is arranged at least partially between adjacent ones of the second plurality of flow path branches and each of the second plurality of flow path branches is arranged at least partially between adjacent ones of the first plurality of flow path branches, thereby reducing the influence of the orientation of the flow meter relative to the socket about the installation axis on flow behaviour inside the flow measurement chamber.

2. A flow meter as claimed in claim 1, the flow guiding arrangement comprising a plurality of conduit portions extending outward from the interior meter wall, the conduit portions being distributed around the interior meter wall to accommodate each of the first plurality of flow path branches between adjacent ones of the plurality of conduit portions, wherein the each of the second plurality of flow path branches passes through a respective one of the plurality of conduit portions.

3. A flow meter as claimed in any preceding claim, wherein the flow path branches are of substantially the same flow cross-section, and preferably are spaced substantially evenly around the full perimeter of the interior meter wall.

4. A flow meter as claimed in any preceding claim, wherein a direction of flow through the flow measurement chamber is substantially aligned with the installation axis, preferably substantially coaxial with the installation axis.

5. A flow meter as claimed in any preceding claim, comprising a pair of ultrasound transducers disposed to measure flow through the flow measurement chamber.

6. A flow meter as claimed in any one of claims 1 to 5, wherein the first and second plurality of flow path branches are arranged around a seat for accepting one of a pair of ultrasound transducers substantially in axial alignment with the flow measurement chamber.

7. A flow meter as claimed in any one of claim 1 to 5, wherein the first and second plurality of flow path branches are arranged around a seat for an ultrasound mirror, the ultrasound mirror and a first seat for an ultrasound transducer adjacent an end of the measurement chamber distal from the mirror being substantially in axial alignment with the flow measurement chamber, wherein the mirror is angled relative to an axis between the mirror and the seat to direct ultrasound incident along the axis between the first seat and the mirror to a further seat for a further ultrasound transducer disposed to one side of the axis between the mirror and the first seat.

8. A flow meter as claimed in claim 7, an axis between the mirror and further seat crossing a wall separating the first and second flow paths.

9. A flow meter as claimed in any one of claims 1 to 3, comprising a pair of ultrasound transducers disposed to measure flow through the flow measurement chamber, the flow measurement chamber being disposed with a direction of flow through the measurement chamber oriented across the installation axis.

10. A flow meter as claimed in any preceding claim, comprising a temperature probe port configured to enable disposing a temperature probe in one of the first and second flow paths, preferably in the second flow path.

11. A flow meter as claimed in any one of claim 5 to 9, the meter being configured to enable the ultrasound transducers to be mounted from outside the flow meter.

12. A flow meter as claimed in any preceding claim, the first and second plurality of flow path branches each consisting of between three and eight branches, preferably between three and five branches, more preferably four branches.

13. A flow meter as claimed in any preceding claim, wherein the other end is closer to the interior meter wall than the one end.

14. A flow meter as claimed in any preceding claim, wherein the first flow path is partially defined by a first wall defining the flow measurement chamber and a second wall surrounding the first wall, preferably wherein the second wall is an exterior wall of the flow meter.

15. A flow meter as claimed in any preceding claim, comprising a thread for threadingly engaging the fastening arrangement to fasten the meter to the socket by rotation of the flow meter.

## Amended claims

### Amended claims in accordance with Rule 137(2) EPC.

1. A flow meter (22) for connection to a coaxial type flow meter socket (2), the socket comprising an interior socket wall (20) separating an annular volume (16) connected to one of an upstream and a downstream pipe of a water supply from a central volume (18) surrounded by the annular volume (16) and connected to the other one of the upstream and downstream pipes, and a fastening arrangement (8) for accepting the flow meter (22) along an installation axis parallel to an axis (A) of the annular volume (16) when the flow meter (22) is installed and holding the flow meter (22) relative to the socket (2), the flow meter (22) comprising:
a flow measurement chamber (36);
a flow guiding arrangement (24, 32, 34, 68, 74) for guiding flow between the annular (16) and central (18) volumes through the flow measurement chamber (36) when the flow meter (22) is connected to the socket (2), the flow guiding arrangement (24, 32, 34, 68, 74) comprising
an interior meter wall (50) for sealingly registering with the interior socket wall (20) when the flow meter (22) is connected to the socket (2) to provide a first flow path between the annular volume (16) and one end of the flow measurement chamber (36) and a second flow path between the central volume (18) and another, opposed, end of the flow measurement chamber (36), **characterised by**
the first and second flow paths each comprising a respective first and second plurality of flow path branches distributed in alternation around the interior meter wall, wherein each of the first plurality of flow path branches is arranged at least partially between adjacent ones of the second plurality of flow path branches and each of the second plurality of flow path branches is arranged at least partially between adjacent ones of the first plurality of flow path branches, thereby reducing the influence of the orientation of the flow meter relative to the socket about the installation axis on flow behaviour inside the flow measurement chamber.

2. A flow meter as claimed in claim 1, the flow guiding arrangement (24, 32, 34, 68, 74) comprising a plurality of conduit portions (42) extending outward from the interior meter wall (50), the conduit portions being distributed (42) around the interior meter wall to accommodate each of the first plurality of flow path branches between adjacent ones of the plurality of conduit portions, wherein the each of the second plurality of flow path branches passes through a respective one of the plurality of conduit portions.

3. A flow meter as claimed in any preceding claim, wherein the flow path branches are of substantially the same flow cross-section, and preferably are spaced substantially evenly around the full perimeter of the interior meter wall (50).

4. A flow meter as claimed in any preceding claim, wherein a direction of flow through the flow measurement chamber is substantially aligned with the installation axis, preferably substantially coaxial with the installation axis.

5. A flow meter as claimed in any preceding claim, comprising a pair of ultrasound transducers (38, 40) disposed to measure flow through the flow measurement chamber (36).

6. A flow meter as claimed in any one of claims 1 to 5, wherein the first and second plurality of flow path branches are arranged around a seat for accepting one (38) of a pair of ultrasound transducers (38, 40) substantially in axial alignment with the flow measurement chamber.

7. A flow meter as claimed in any one of claim 1 to 5, wherein the first and second plurality of flow path branches are arranged around a seat (86) for an ultrasound mirror, the ultrasound mirror (84) and a first seat (66) for an ultrasound transducer (38) adjacent an end of the measurement chamber distal from the mirror being substantially in axial alignment with the flow measurement chamber, wherein the mirror is angled relative to an axis between the mirror and the seat to direct ultrasound incident along the axis between the first seat and the mirror to a further seat (72) for a further ultrasound transducer (40) disposed to one side of the axis between the mirror and the first seat.

8. A flow meter as claimed in claim 7, an axis between the mirror (84) and further seat (72) crossing a wall separating the first and second flow paths.

9. A flow meter as claimed in any one of claims 1 to 3, comprising a pair of ultrasound transducers (38, 40) disposed to measure flow through the flow measurement chamber (36), the flow measurement chamber (36) being disposed with a direction of flow through the measurement chamber oriented across the installation axis.

10. A flow meter as claimed in any preceding claim, comprising a temperature probe port configured to enable disposing a temperature probe (30) in one of the first and second flow paths, preferably in the second flow path.

11. A flow meter as claimed in any one of claim 5 to 9, the meter (22) being configured to enable the ultrasound transducers (38, 40) to be mounted from outside the flow meter (22).

12. A flow meter as claimed in any preceding claim, the first and second plurality of flow path branches each consisting of between three and eight branches, preferably between three and five branches, more preferably four branches.

13. A flow meter as claimed in any preceding claim, wherein the other end is closer to the interior meter wall (20) than the one end.

14. A flow meter as claimed in any preceding claim, wherein the first flow path is partially defined by a first wall defining the flow measurement chamber and a second wall (28) surrounding the first wall, preferably wherein the second wall (28) is an exterior wall of the flow meter (22).

15. A flow meter as claimed in any preceding claim, comprising a thread (26) for threadingly engaging the fastening arrangement (8) to fasten the meter (22) to the socket by rotation of the flow meter (22).
